# EUROPEAN PATENT SPECIFICATION

(11) **EP 3 794 260 B1**
(45) Date of publication and mention of the grant of the patent: **26.02.2025**
(21) Application number: 19803835.8
(22) Date of filing: 16.05.2019
(51) Int. Cl.: F16K 31/70, F16K 11/065, F16K 15/02, F16K 7/04, F16K 15/18, F16K 5/04, F16K 1/22

(54) **SHAPE MEMORY ALLOY VALVE AND METHOD FOR FABRICATION THEREOF**
FORMGEDÄCHTNISLEGIERUNGSVENTIL UND VERFAHREN ZU DESSEN HERSTELLUNG
VANNE EN ALLIAGE À MÉMOIRE DE FORME ET PROCÉDÉ POUR SA FABRICATION

(30) Priority: 16.05.2018 US 201862672275 P
(43) Date of publication of application: 24.03.2021
(73) Proprietor: Smarter Alloys Inc., Waterloo, Ontario N2V 1N2 (CA)
(72) Inventor: ZAMANI, Nima, Waterloo, Ontario N2V 1N2 (CA); MCWHINNEY, Steven, Waterloo, Ontario N2V 1N2 (CA); KHAN, Mohammad Ibrahem, Waterloo, Ontario N2V 1N2 (CA)
(74) Representative: Elzaburu S.L.P.
(86) International application number: PCT/CA2019/050663
(87) International publication number: WO 2019/218072

(56) References cited:
- CN-A- 103 925 389
- JP-A- S6 480 457
- JP-B2- 5 550 014
- US-A- 5 325 880
- US-A- 5 325 880
- US-A- 5 954 079
- US-A1- 2008 085 436
- US-A1- 2012 156 096
- US-A1- 2015 119 691
- US-B2- 6 926 246
- US-B2- 7 021 055
- US-B2- 8 002 235

## Description

### FIELD

The present disclosure relates generally to shape memory alloy (SMA) valves including actuators. More particularly, the present disclosure relates to a shape memory alloy valve and actuator and fabrication method therefor.

### BACKGROUND

In the actuator and valve industries, there is an on-going need for smaller and more efficient valves for controlling flows of gases and liquids in various technologies.

Shape memory alloys have been known for some time and have been used as actuators and valves in some limited circumstances. SMA valves have generally been limited in their applications by some of the characteristics of SMAs, such as only having the option of being either on or off, limited endurance over multiple cycles, limited speed of cycling/operation, inability to sense force or displacement, limited configurations and the like.

US 2012/156096 A1 is directed at medical sterilization container shape memory alloy (SMA) valve that includes first and second valve portions with the second valve portion connected to a SMA device.

CN 103925389 B is directed at a valve that includes a set of metal memory pieces that are attached to a frame. The valve is used to cover vent holes within spokes of a tire wheel.

JP S6480457 A is directed at a spray header for a high-temperature fluid that includes a shape memory metal plate that is connected to a bias spring.

US 5325880 A is directed at a shape memory alloy film actuated microvalve that includes a valve control element that includes a thin film membrane formed from a shape memory alloy material.

US 5954079 A is directed at asymmetrical thermal actuation in a microactuator.

As such, there is a need for an improved SMA actuator and valve and method of fabricating the same.

### SUMMARY

Embodiments of SMA valves described herein are intended to overcome at least some of the limitations of conventional SMA valves.

According to an aspect herein, there is provided a shape memory alloy (SMA) valve including an SMA activator component having a shape memory effect to open or close the valve. The SMA valve is formed from a monolithic sheet of SMA or, in examples not covered by the claimed invention, a wire of SMA. The SMA valve may operate via choking (not claimed), torsion (not claimed) or lateral movement in one or more dimensions.

According to an aspect herein, there is provided a shape memory alloy (SMA) valve formed from a monolithic sheet of SMA, the SMA valve including: a stage; and one or more SMA actuator segments in the form of actuation patterns connected to the stage and configured to move the stage to seal or open a flow of gas or liquid when the shape memory effect is activated. In some cases, actuator segments may be provided to move the stage in one dimension, two dimensions or three dimensions. In some cases not covered by the claimed invention, rather than a stage, the sheet may be cut to provide a sealing portion that can be activated to squeeze a conduit carrying a gas or liquid.

According to an aspect not being part of the claimed invention, there is provided a shape memory alloy (SMA) valve formed from a wire of SMA, the SMA valve including one or more SMA actuator segments treated to include a shape memory effect and configured to seal or open a flow of gas or liquid when the shape memory effect is activated. In some cases, the SMA valve may include a ball formed on the wire, which acts as a seal in a valve. In other cases, the SMA valve may be provided by wrapping the wire around a conduit for gas or liquid and upon activation compressing or decompressing the conduit to reduce or stop flow or increase or allow flow.

In some cases, an SMA valve may include a biasing component configured to bias the valve toward a predetermined position.

According to an aspect herein, there is provided a shape memory alloy (SMA) valve formed from a monolithic sheet of SMA, the SMA valve including: a sealing stage; a biasing component configured to bias the sealing stage toward a predetermined position; and an SMA actuator component provided to the sealing stage and configured to move the sealing stage against the bias when the shape memory effect is activated.

In some cases, an SMA valve may include a heat sink provided to cool the SMA actuator component.

In some cases, an SMA valve may be configured to operate between the temperatures of -40ºC and 80ºC.

An SMA valve will generally include at least one electrical connector for providing current to the actuation segments.

An SMA valve may also include an electrical controller that connects with the SMA valve to control the segments. The electrical controller may also include or be connected with a resistance or capacitance sensor. The resistance or capacitance sensor provides feedback to the controller to allow a processor in the controller to determine the position or force of the valve.

### BRIEF DESCRIPTION OF THE FIGURES

Other aspects and features of the present disclosure will become apparent to those ordinarily skilled in the art upon review of the following description of various embodiments, by way of example only, in conjunction with the accompanying figures.
Fig. 1 illustrates an embodiment of a moving shutter type of actuator/valve;
Fig. 2 illustrates various types of end segments that may be used with an SMA actuator/valve such as that of Fig. 1;
Fig. 3 illustrates various types of actuation patterns that may be used with SMA valves such as that of Fig. 1;
Fig. 4 illustrates various types of electrical connections and actuation patterns that may be used with SMA valves such as that of Fig. 1;
Fig. 5 illustrates various arrays of actuators that may be used with SMA valves such as that of Fig. 1;
Fig. 6 illustrates various shutter configurations that may be used with SMA valves such as that of Fig. 1;
Fig. 7 illustrates an embodiment of a single axis actuator for an SMA valve, when moved in opposing directions;
Fig. 8 illustrates an embodiment of a two axis actuator for an SMA valve, which can be moved in two dimensions;
Fig. 9 illustrates an embodiment of a three axis actuator for an SMA valve, which can be moved in three dimensions;
Fig. 10 illustrates an embodiment of a rotary actuator for an SMA valve, which can be rotated.
Figures 11-18 illustrate examples not covered by the claimed invention. In particular:

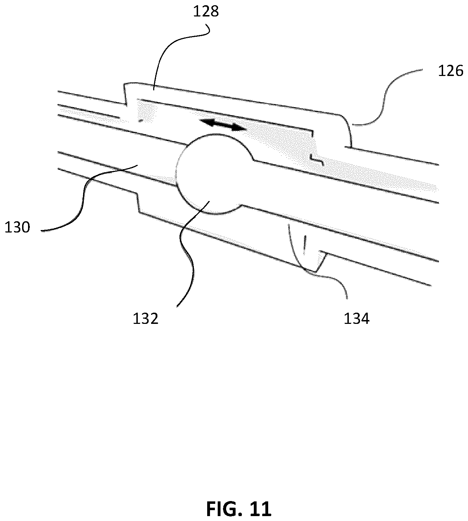

Fig. 11 illustrates an embodiment of a wire bead SMA valve and associated actuator;

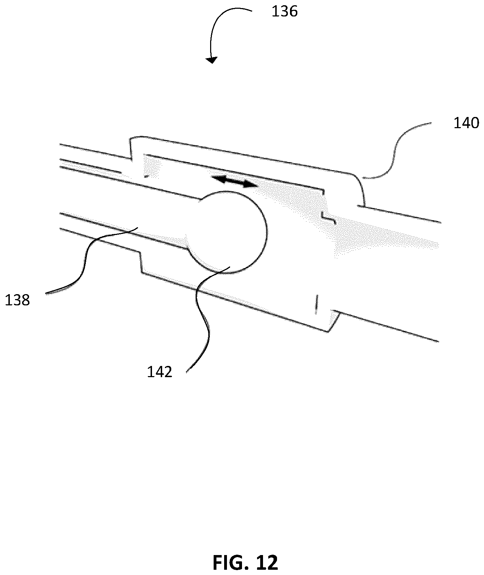

Fig. 12 illustrates another embodiment of a wire bead SMA valve and associated actuator;

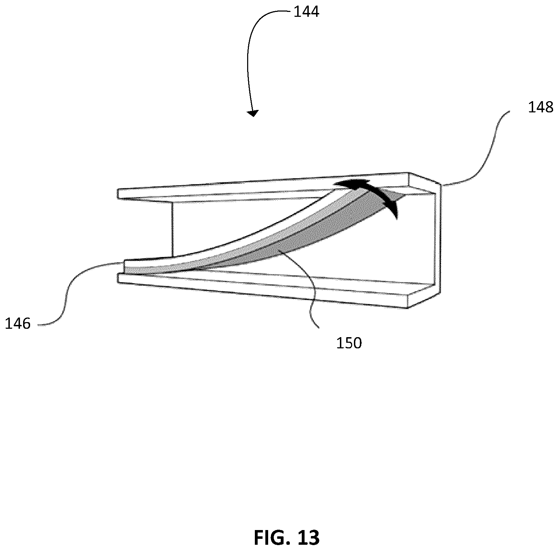

Fig. 13 illustrates an embodiment of a cantilever SMA valve and associated actuator;

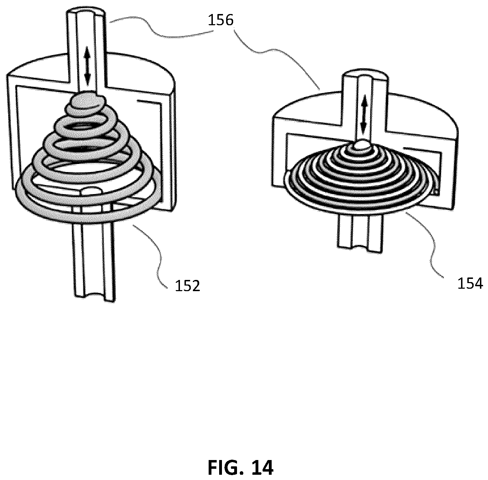

Fig. 14 illustrates an embodiment of a coil-type SMA valve and associated actuator;

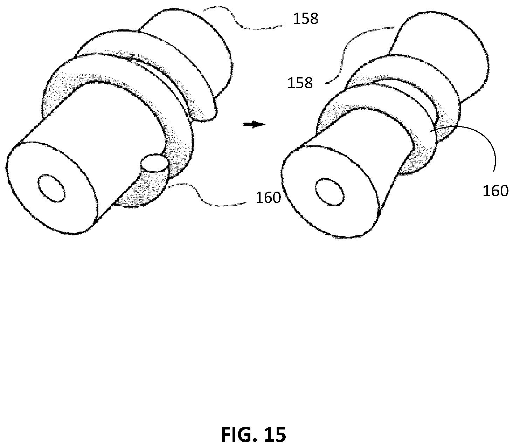

Fig. 15 illustrates an embodiment of a choke-type SMA valve and associated actuator;

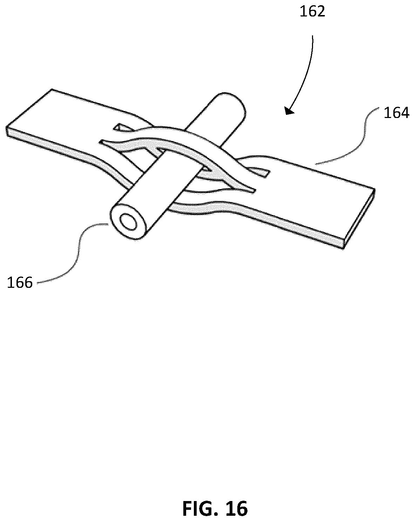

Fig. 16 illustrates another embodiment of a choke-type SMA valve and associated actuator using a sheet;

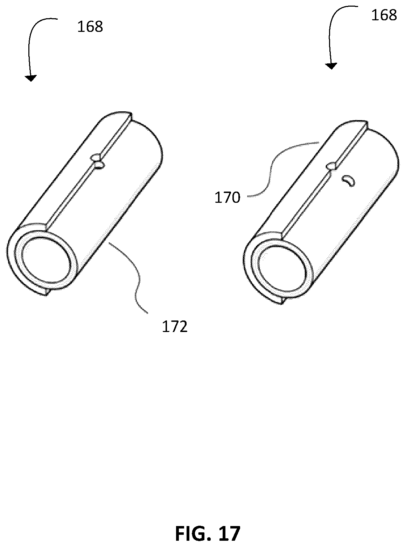

Fig. 17 illustrates an embodiment of an SMA valve and associated actuator using torsion;

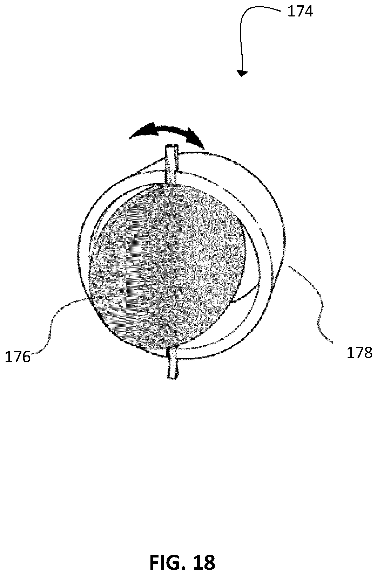

Fig. 18 illustrates another embodiment of an SMA valve and associated actuator using torsion;

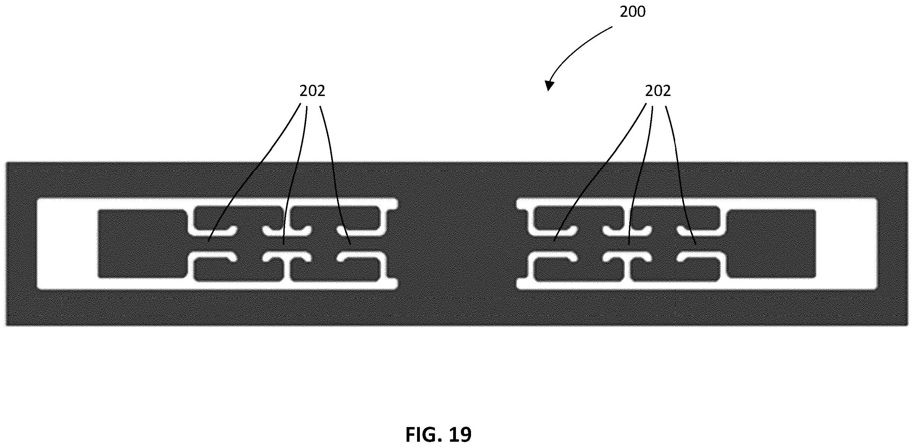

Fig. 19 shows an embodiment of an SMA valve according to the invention having multiple actuation sections, shown in a flat arrangement; and

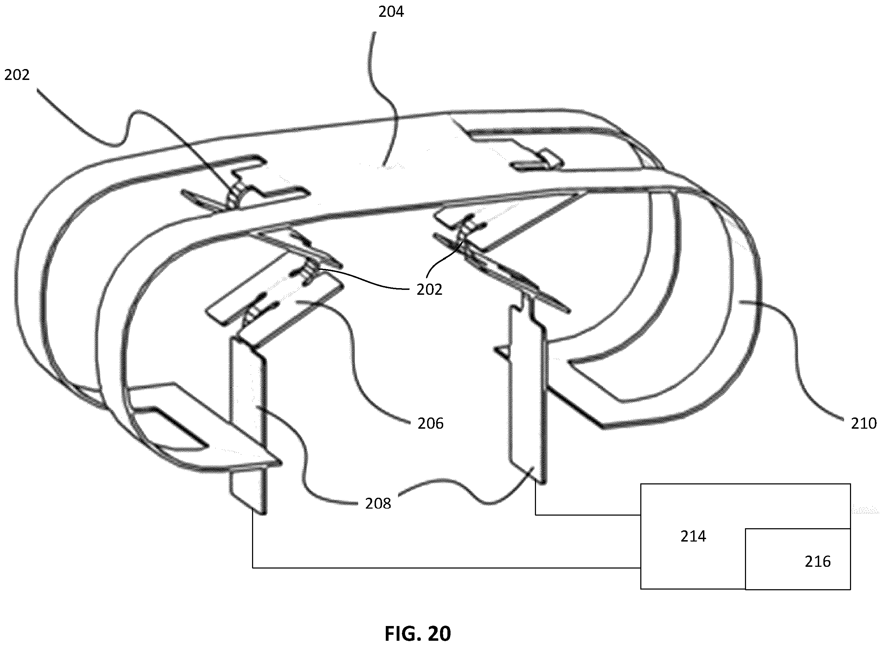

Fig. 20 shows the SMA valve of Fig. 19 when in use.

### DETAILED DESCRIPTION

The present disclosure generally relates to SMA actuators in a variety of forms (sheets, and, not covered by the claimed invention, tubes, wires, coils) actuating in linear or rotary motions. Although not covered by the claimed invention, the actuators may also be coupled with other elements to form valves, which can control the flow of gas/fluid, such as in pneumatic and hydraulic valves or the like. In the following the terms "actuator" and "valve" may be used interchangeably and will be understood by the context. The embodiments of the actuator also include apparatus for connecting the actuator to electronic boards and other structural units. In addition to actuator designs, some of the methods of fabrication of the actuators are outlined as well. The actuators/valves may include ON/OFF such as 3/2, 2/2, and 2/1 control valves as well as directional, flow regulator, and pressure control valves. The disclosure also relates to a method for fabrication of the valves to provide additional functionality.

In forming SMA actuators or valves of the type described herein, SMA sheets of different thicknesses or SMA wires can be processed in various ways to make the necessary shapes or geometries and to form the shape memory effects used for actuation, for example, laser cutting, laser processing, stamping, or the like. For example, for the actuation segments, laser processing may be used to alter the actuation properties in desired regions. Laser processing can also be used to create the actuating detent features described herein. An example of laser processing of SMA materials is described in, for example, US Patent No. 9,186,853, issued November 17, 2015 to Khan et al.

In embodiments of the actuators and valves described herein, various types of SMA's can be used, including conventional NiTi, or higher temperature alloys such as NiTiHf. In some cases, the higher temperature alloys are used to enable faster actuation and consequently a higher frequency for actuation. The type of material chosen may also depend on the ambient temperature in the environment where the valve is to be used. In some cases, it may be possible to reduce costs, by laser processing the SMA to locally add Hf to Ni-rich Nitinol (60-70 at% Ni), particularly in the actuating segments. The methods disclosed in the above noted patent can be used for this purpose.

Further, control of the actuators and valves can be performed by monitoring the resistance, capacitance or other electrical characteristics in the materials to determine the position of the valve element and/or the force exerted. Further information on the monitoring of electrical characteristics to obtain position or force information is provided in PCT Patent App. No. PCT/CA2017/051084, filed September 14, 2017 to Zamani et al.

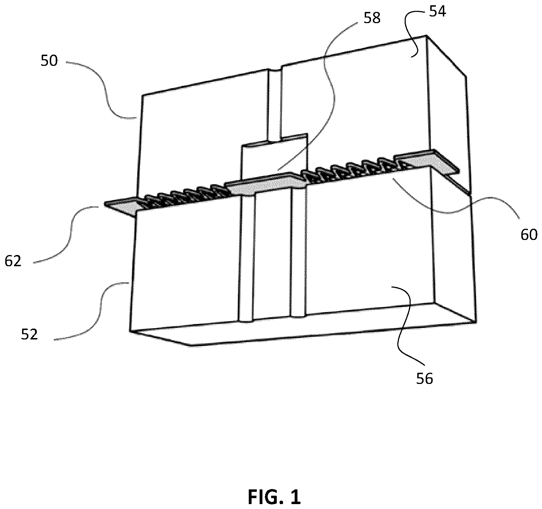

Figure 1 illustrates an embodiment of a uni-axis shutter SMA valve 50. In Fig. 1, the SMA valve 50 is in its 'neutral' position. The SMA valve 50 includes a housing 52, which includes a top housing block 54 and a bottom housing block 56. The SMA valve includes a shutter stage 58, an SMA actuator 60 (sometimes called an SMA actuation pattern), and an end segment 62, which is used as an electrical connection. This type of moving shutter valve includes a shutter that is moved via one or more shape memory alloys (SMAs) to control the state of a valve. The housing contains channels for the fluid to reach the appropriate port. The shutter controls which channel the fluid travels through via its position relative to the channels.

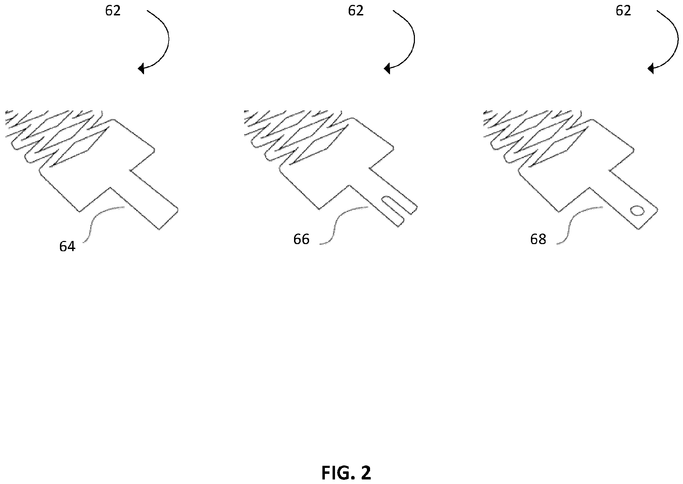

Figure 2 illustrates various example geometries or configurations for providing electrical connection to the actuator/valve via the end segment 62, for example, spot weld or soldering 64, u-terminal 66, hole 68, or the like. A different geometry or configuration for the electrical connection to the PCB can be used depending on the application for the particular actuator/valve.

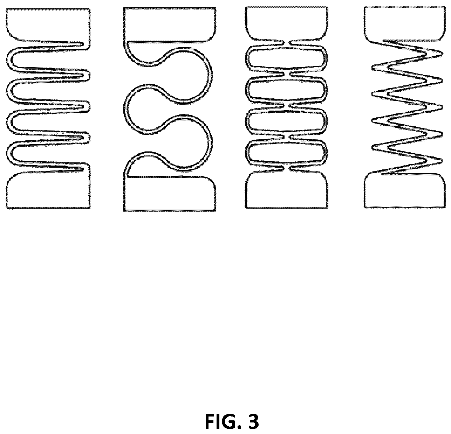

Figure 3 illustrates various alternative actuation pattern geometries or configurations. In fabrication, the various geometries or configurations may be formed by, for example, stamping, laser cutting, or the like to create an actuating pattern that achieves the force and displacement requirements of the actuator/valve system. Custom actuation pattern configuration may also be used to define a specific motion/force profile of the shutter through space. Various examples of configurations may include U-Shaped, Rounded/Sinusoidal, Oval, Zigzag, or the like.

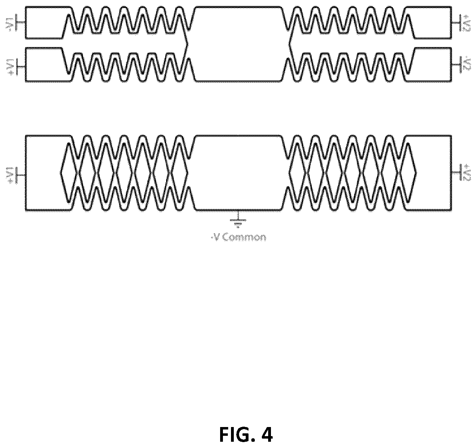

Figure 4 illustrates various electrical connection configurations. The configuration having separated connectors (i.e. top example) may eliminate or reduce the need for an electrical connection to be made to the shutter stage, as is the case in the lower example. The placement of electrical connections can be applied such that different actuation modes may be achieved on one actuator with the use of a control circuit. Multiple electrically isolated segments may be created in the actuation pattern. This allows current to flow through different paths of the actuating pattern, which can allow different regions to actuate.

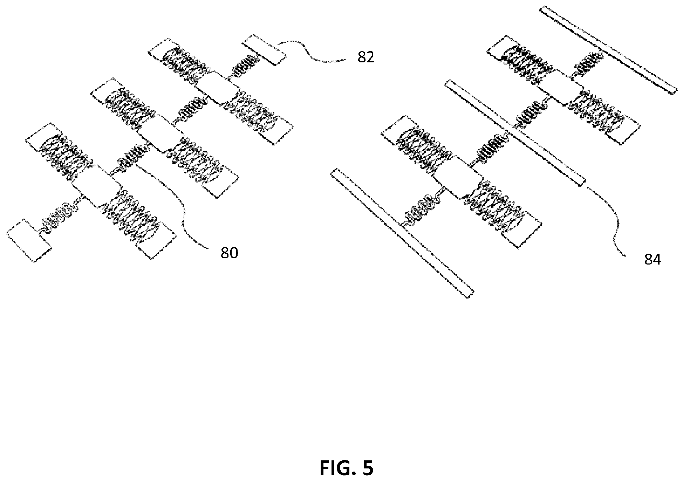

Figure 5 illustrates various array configurations that may be provided on a single sheet of SMA. For example, multiple actuators can be combined or created using a single sheet of raw material to realize various actuation systems. The array configuration in conjunction with the channel configuration of the housing may be combined to create different types of control valves. i.e. two 2/1 valves can be combined to control a 3/2 valve. By creating multiple valves (shutters with SMA actuators) from a single SMA sheet, the efficiency of production and assembly of the valves may be improved. This allows for advantages such as a flexible connection 80, a common electrical connection for the array 82, a stationary connection 84, or the like.

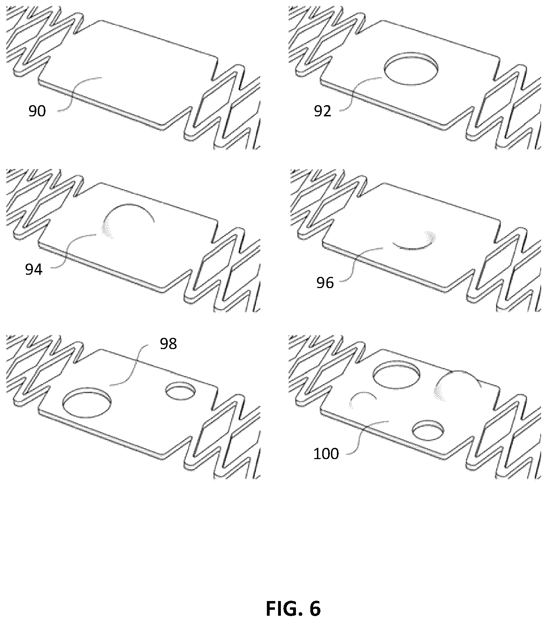

Figure 6 illustrates various shutter stage customizations and configurations. The design of the shutter stage can be customized for various valve or actuator applications. Different sized holes can be stamped or cut into the stage to facilitate different flow rates through the valve. Detent features can be pressed or processed into the stage to enhance or improve mating and sealing capabilities of the stage. These customizations can be implemented in various configurations and positions on the shutter stage. By implementing some of these features on the shutter stage, many more complicated embodiments (i.e. 3/2 valve) may be made using, for example, a single shutter stage. **In** Figure 6, the following configurations are illustrated: base stage geometry 90, stage with hole 92, stage with pressed detent feature 94, stage with actuating detent feature 96, stage with array of different holes 98, stage with a combination of features 100. The combination of features may include, for example:
∘ Hole
   ▪ Different shapes (Circle, Rectangle, Oval, etc.)
   ▪ Different sizes
∘ Multiple holes
∘ 3D geometry
   ▪ Stamped shapes (rect, round, etc)
   ▪ Laser Cut
      - Full Cut
      - Partial cutting for geometry changes
∘ Locating
   ▪ Detent or protruding features in stage that mate with valve housing to generate stable position(s) for various valve functions
   ▪ Actuating pattern can also be added somewhat perpendicular to stage movement to mate with discrete positions in the valve housing
∘ Sealing
   ▪ Additional sealing force may be attained by adding a spring in the z-direction
      - Can be done with SMA for active control

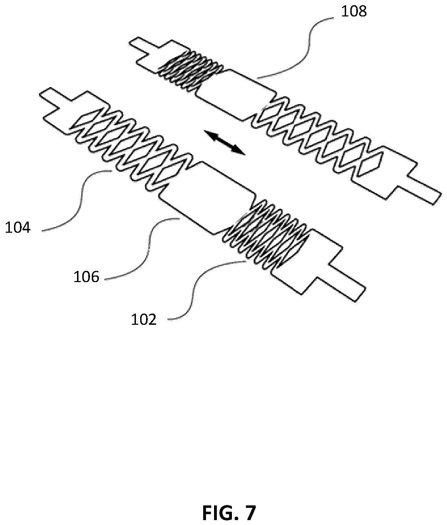

Figure 7 illustrates a uni-axis SMA valve when actuated in opposing directions. **In** particular, Fig. 7 illustrates an actuated SMA region 102, a strained SMA region 104, a shutter stage in one position 106, and the shutter stage when actuated in the opposite direction 108. **In** this example, one or two segments of the SMA actuation region can be used to move a shutter along one axis. The actuation pattern geometry may be different in each segment surrounding the shutter stage to promote or address specific actuation characteristics.

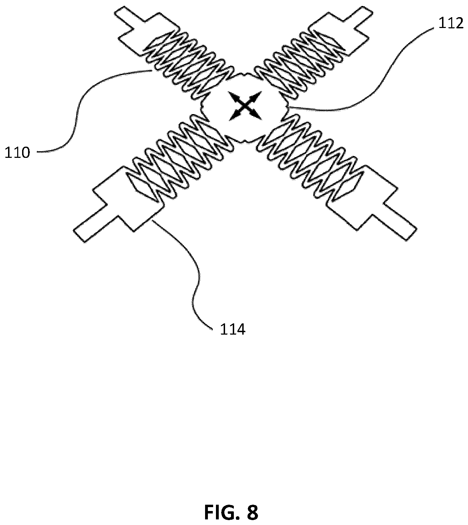

Figure 8 illustrates a dual-axis SMA actuator including a Y-axis actuation pattern 110, a shutter stage 112, and an X-axis actuation pattern 114. As shown in Fig. 8, multiple SMA actuation regions may be arranged such that the shutter is moved in two axes in a controlled manner. The angle of the actuation segments relative to each other and the stage can be varied for specific direction control. The number of actuation segments can be varied to achieve different force characteristics.

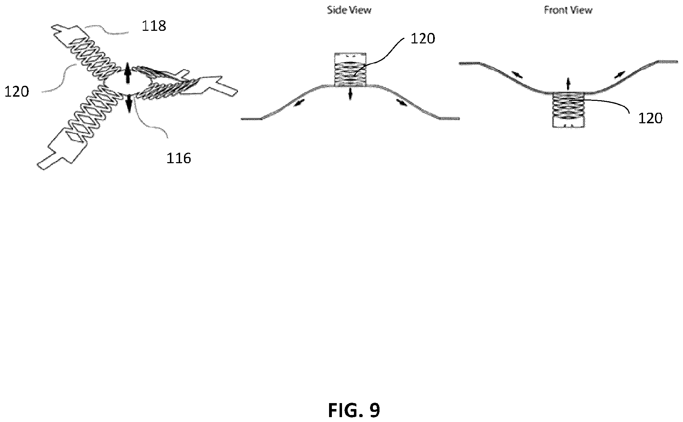

Figure 9 illustrates a tri-axis SMA actuator/valve, including a shutter stage 116, an end segment 118, and various actuators 120. Multiple SMA actuation regions can be arranged such that the shutter is moved in three axes in a controlled manner.

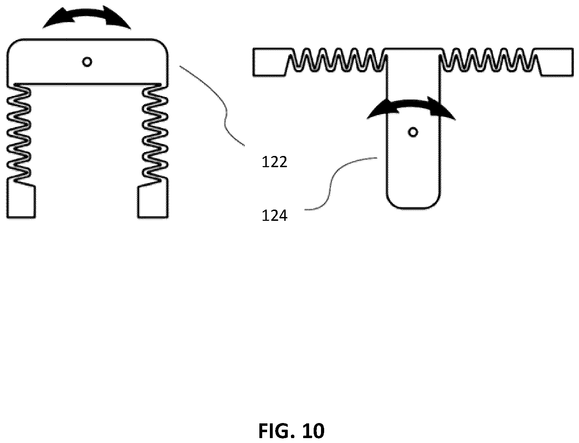

Figure 10 illustrates example rotating actuator/valves, including a rotary stage with antagonistic SMA actuator on same side of the shutter stage 122 and a rotary stage with antagonistic SMA actuator on opposite side of the shutter stage 124. Similar to linear-moving shutter stages shown, the rotary mechanism may control the flow of the fluid by its rotary position relative for the channels in the housing block or similar.

Another type of actuator/valve not being covered by the claimed invention may be formed using a wire with a ball (sometimes referred to as a "wire ball" actuator or valve) rather than using a sheet or the like. In particular, processing of SMA wire segments may induce cross sectional changes, which may be used to create a valve. Actuation of the SMA can move a processed region of the wire within a valve to, for example, a closed/opened position. In this type of actuator valve the properties of the wire and ball may be adjusted in various ways:
- Wire
   ∘ Different diameters
   ∘ Different length
   ∘ PF/SMF
- Ball
   ∘ Change size of ball
   ∘ Geometry (via gravity, airflow, etc)
   ∘ Include electrical connection

Figure 11 illustrates an antagonistically driven SMA wire bead/ball configured to act as a check valve 126. The check valve 126 incudes a valve housing 128, a first SMA wire segment 130, an integrated wire ball for sealing 132, and a second SMA wire segment 134. In this configuration, opening and closing of the valve can be actively controlled in both directions.

Figure 12 illustrates a processed SMA wire bead/ball configured to act as a check valve 136. In this example, the check valve includes an SMA wire 138, a valve housing 140, and an integrated wire ball for sealing 142. In this example, opening or closing of the valve can be actively controlled in one direction and passively returned in the other direction.

Another type of SMA valve/actuator (not covered by the claimed invention) can be formed to use a cantilever action. For example, an SMA actuator can be fixed at one end and actuated to control the flow through a channel in a valve. In this type of actuator, various parameters can be adjusted:
- SMA sheet
   ∘ Thickness
   ∘ Cutouts
   ∘ Stamped/ laser cut z-profile
- Dielectric
   ∘ Difference thickness
   ∘ Geometry (cutouts, length, width)
   ∘ Material
- Actuation direction
   ∘ Can be oriented to facilitate NO and NC valves

Figure 13 illustrates an example processed SMA sheet (not covered by the claimed invention) configured as a cantilevered flow control valve 144. The cantilevered valve 144 includes a fixed SMA actuator 146 (fixed at one end), a valve housing 148, and a laser-processed SMA portion 150. The cantilevered bending actuation may be achieved by laser processing one or multiple regions of the SMA actuator. In this example, the bottom portion is processed.

Figure 14 illustrates single and dual telescoping SMA coil valve actuators (not covered by the claimed invention): a single helix 152 and a double helix 154, in a housing 156. In the telescoping actuators/valves, SMA wires can be wound and trained such that they actuate in a telescoping fashion. This actuation can be achieved in various ways:
- Single helix
   ∘ Different pitch
   ∘ Different number of revolutions
   ∘ Different trained height
   ∘ Different wire diameters
   ∘ Different coil diameters
   ∘ Cut from sheet, coiled from wire
   ∘ Different SMA cross section shape (Square from sheet, round from wire)
   ∘ Weld wire together to form top plug
   ∘ SMA can be used to actuate ball for valve independent of SMA
- Multiple helices can be configured in similar ways.

SMAs can also be used to make choke-type actuators/valves. In this configuration, an SMA material, such as a wire, can be wrapped around a semi flexible channel and actuated in a way that constricts or narrows the channel thus reducing, restricting or preventing flow. This method is especially beneficial since the SMA actuator is isolated from the flow that the SMA actuator is controlling.

In a spiral version of the choke-type actuator/valve, an SMA wire or wires can be wound around a compressible vessel and actuated such that the SMA actuator constricts or reduces flow through a channel.

Figure 15 illustrates an example SMA coil choke actuator/valve 158 (not covered by the claimed invention) with the SMA wire 160 in neutral (left) and constricted (right) positions. The coil choke actuator/valve can be adjusted using various parameters/characteristics:
- Number of rings
- Tube inner and outer diameter
- Weld wire together
- Tube material (plastic, rubber, etc)
- Complete closure or flow control
- Different wire cross sections
- Cut from sheet and trained

A choke-type valve/actuator (not covered by the claimed invention) can also be made using an SMA sheet. Figure 16 illustrates an example SMA sheet choke valve 162. An SMA sheet 164 can be used to create an actuator that constricts or narrows a channel 166 from the exterior. Various geometries can be generated via cutting/stamping/pressing, or other known methods and configured/trained such that the sheet surrounds a desired segment.

Torsion of SMAs (not covered by the claimed invention) can also be used to create various configurations of valves/ actuators. For example, an SMA tube fixed at one or both ends can be torqued and actuated to control the alignment of different channels. Figure 17 illustrates an example torque tube SMA valve 168. The torque tube valve 168 includes a valve housing 170 and an SMA tube 172. Various properties/characteristics can be adjusted depending on the application:
- Hole size and shape
- Array of holes different sizes, locations
- Housing material
- SMA tube from tube, sheet, wire
- Dynamic sealing between rotating SMA and housing

Torsion of SMAs can also be used to rotate a valve shutter and control the flow through a channel (sometimes referred to as a "torsion sheet"). Actuation of the SMA causes the shutter to rotate which opens or closes an opening. Figure 18 illustrates an example SMA torque shutter valve 174, not covered by the claimed invention, which includes an SMA valve shutter 176 and a valve housing 178.

Various parameters/characteristics can be adjusted depending on the application.
- Different tube cross section diameter, shape, thickness
- Different SMA sheet thickness
- SMA for torque component, other material for shutter
- Bias in open or closed position (spring, SMA, etc)

Figures 19 and 20 illustrate another embodiment of an SMA valve/actuator 200 according to the invention. In this example, the valve 200 is formed from a monolithic SMA sheet. Fig. 19 shows the valve in a flat formation and Fig. 20 shows the valve as it will be used. As described further below, the valve 200 includes both a biasing component and a shape memory component.

In this embodiment, the valve is fabricated from an SMA sheet that initially does not exhibit shape memory effect. For example, the sheet may be cold worked or pseudoelastic but does not have a shape memory in place. The SMA sheet is then cut to the shape shown in Fig. 19. The cutting may be performed using various methods, for example, laser, EDM, E-Beam, CNC machining, stamping or the like. After cutting, actuation segments 202 are processed to enable shape memory effect. This processing can be performed by using, for example, resistive heating methods, laser, salt bath, conductive methods or the like. In this case, since the valve and actuators are intended to be small, a type of processing that can target a small area consistently is preferred. Processing will also typically be performed in an inert environment to minimize detrimental effects of oxidation.

The valve 200 is then formed into the geometry shown in Fig. 20. Multiple shape setting steps may be used to form the piece into that geometry, which may also involve heating the SMA material to shape setting temperatures. As shown in Fig. 20, the valve 200 includes the actuation segments 202, a sealing stage 204, a plurality of heat sinks 208, two supporting tabs 210, and a biasing spring section 212. The sealing stage 204 may be formed to have a raised portion thereon, which will act as a seal on a flow inlet/outlet (not shown).

In operation, the valve 200 is placed such that the supporting tabs 210 and biasing spring section 212 are braced against a surface or the like. Then an electrical controller 214 is used to pass current through the supporting tabs 210, which results in resistively heating the actuation segments 206. When the actuation segments are heated, they contract due to the shape memory effect. When the current is turned off via the electrical controller, the actuation segments 206 will cool and the biasing spring section 212 pulls the sealing stage back to the previous position. The actuation segments are cooled more rapidly due to the provision of the heat sinks 208. In this way, the sealing stage 204 can be moved up and down to seal against an opening to act as a valve. Testing has shown that the valve 200 can be used over a large number of cycles and can move at a rate/frequency that is appropriate for various valve operations.

The electrical controller may also include a resistance monitor 216 that monitors the resistance in the valve, and, in particular, the actuation segments, which can be correlated with the amount of actuation and/or force.

It will be understood that the valve 200 may have more or fewer actuation segments or supporting tabs. The valve 200 may not need the heat sinks, depending on the application. The sealing stage 204 may be formed with a protrusion or the like to seal against a hole or the like. In some cases, the biasing spring segment may not be needed if the actuation segments are configured to provide a biasing effect instead of or in addition to the actuation.

Some benefits intended to be provided by embodiments of valves herein include the following. The valve can be a single component, which provides ease of assembly and generally does not require crimping and the like. Generally, a single component that can be, for example, laser cut, will be cheaper to make. Valves using SMA can be used as both an actuator and as a sensor (to measure displacement/ force). By using actuator segments/components having multiple shape memory effects and/or differing shape memory effects among actuator segments/components together with feedback relating to position/force, it is intended to be possible to provide variable and precise flow control.

In the preceding description, for purposes of explanation, numerous details are set forth in order to provide a thorough understanding of the embodiments. However, it will be apparent to one skilled in the art that some specific details may not be required. In other instances, well-known structures may be shown in block diagram form in order not to obscure the understanding. It will be further understood that elements from each embodiment can be utilized with other embodiments in appropriate circumstances. For example, the electrical controller or heat sinks shown in relation to Fig. 20 or similar could be used with other embodiments herein to assist with controlling the actuation and monitoring of valves. Further, some embodiments may include more or fewer elements in various applications. For example, in some embodiments, it may only be necessary to have one actuation segment/component while in other embodiments, more actuation segments/components can be added to provide additional force or range of movement.

In some cases, embodiments of the disclosure may include a computer program product stored in a machine-readable medium (also referred to as a computer-readable medium, a processor-readable medium, or a computer usable medium having a computer-readable program code embodied therein). For example, the electrical controller may include a processor and a machine readable medium. The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A shape memory alloy (SMA) valve formed from a monolithic sheet of SMA, the SMA valve comprising:
a stage (58, 204) formed from the monolithic sheet;
**characterized in that** the SMA valve further comprises
one or more SMA actuator segments (60, 202) formed from the monolithic sheet in the form of actuation patterns connected to the stage (58, 204) and configured to move the stage (58, 204) so that the stage seals or opens a flow of gas or liquid when the shape memory effect is activated.

2. The SMA valve of Claim 1 further comprising:
a biasing component (212) configured to bias the stage (58, 204) toward a predetermined position;
wherein the one or more SMA actuator segments (60, 202) move the stage (58, 204) against the bias when the shape memory effect is activated.

3. An SMA valve according to any one preceding claim, further comprising a heat sink (208) provided to cool the one or more SMA actuator segments (60, 202).

4. An SMA valve according to any one preceding claim, wherein the SMA valve is configured to operate between the temperatures of -40°C and 80°C.

5. An SMA valve according to claim 1 wherein the actuation patterns are formed by one of stamping or laser cutting.

6. An SMA valve according to claim 1 wherein the actuation patterns provide force and displacement requirements of the SMA valve.

7. An SMA valve according to claim 1 wherein the actuation patterns comprise at least two electrically isolated segments.

8. An SMA valve according to claim 1 comprising at least two SMA actuator segments (60. 202), the at least two SMA actuator segments (60, 202) enabling the stage (58, 204) to move along at least two different axes.

9. An SMA valve according to claim 8 wherein at least two of the two different axes are perpendicular to each other.

## Patentansprüche

1. Ein Formgedächtnislegierungsventil (Shape Memory Alloy - SMA), das aus einer monolithischen SMA-Platte gebildet ist, das SMA-Ventil umfassend:
eine Stufe (58, 204), die aus der monolithischen Platte gebildet ist; **dadurch gekennzeichnet, dass** das SMA-Ventil ferner umfasst
ein oder mehrere SMA-Aktuatorsegmente (60, 202), die aus der monolithischen Platte in Form von Betätigungsmustern gebildet sind, die mit der Stufe (58, 204) verbunden und konfiguriert sind, die Stufe (58, 204) so zu bewegen, dass die Stufe einen Gas- oder Flüssigkeitsstrom abdichtet oder öffnet, wenn der Formgedächtniseffekt aktiviert ist.

2. SMA-Ventil nach Anspruch 1, ferner umfassend:
eine Vorspannkomponente (212), die konfiguriert ist, die Stufe (58, 204) in Richtung einer vorbestimmten Position vorzuspannen;
wobei das eine oder die mehreren SMA-Aktuatorsegmente (60, 202) die Stufe (58, 204) gegen die Vorspannung bewegen, wenn der Formgedächtniseffekt aktiviert ist.

3. SMA-Ventil nach einem der vorstehenden Ansprüche, ferner umfassend einen Kühlkörper (208), der vorgesehen ist, das eine oder die mehreren SMA-Aktuatorsegmente (60, 202) zu kühlen.

4. SMA-Ventil nach einem der vorstehenden Ansprüche, wobei das SMA-Ventil konfiguriert ist, zwischen den Temperaturen von -40 °C und 80 °C zu arbeiten.

5. SMA-Ventil nach Anspruch 1, wobei die Betätigungsmuster durch Stanzen oder Laserschneiden gebildet sind.

6. SMA-Ventil nach Anspruch 1, wobei die Betätigungsmuster Kraft- und Verstellungsanforderungen des SMA-Ventils bereitstellen.

7. SMA-Ventil nach Anspruch 1, wobei die Betätigungsmuster mindestens zwei elektrisch isolierte Segmente umfassen.

8. SMA-Ventil nach Anspruch 1, umfassend mindestens zwei SMA-Aktuatorsegmente (60. 202), wobei die mindestens zwei SMA-Aktuatorsegmente (60, 202) es der Stufe (58, 204) ermöglichen, sich entlang mindestens zweier unterschiedlicher Achsen zu bewegen.

9. SMA-Ventil nach Anspruch 8, wobei mindestens zwei der zwei verschiedenen Achsen senkrecht zueinander sind.

## Revendications

1. Vanne en alliage à mémoire de forme (SMA) formée à partir d'une feuille monolithique de SMA, la vanne SMA comprenant :
un étage (58, 204) formé à partir de la feuille monolithique ; **caractérisée en ce que** la vanne SMA comprend en outre
un ou plusieurs segments d'actionneur SMA (60, 202) formés à partir de la feuille monolithique sous la forme de motifs d'actionnement connectés à l'étage (58, 204) et configurés pour déplacer l'étage (58, 204) de sorte que l'étage ferme ou ouvre un flux de gaz ou de liquide lorsque l'effet de mémoire de forme est activé.

2. Vanne SMA selon la revendication 1, comprenant en outre :
un composant de sollicitation (212) configuré pour solliciter l'étage (58, 204) vers une position prédéterminée ;
dans laquelle le ou les segments d'actionneur SMA (60, 202) déplacent l'étage (58, 204) contre la sollicitation lorsque l'effet de mémoire de forme est activé.

3. Vanne SMA selon l'une quelconque des revendications précédentes, comprenant en outre un dissipateur thermique (208) prévu pour refroidir le ou les segments d'actionneur SMA (60, 202).

4. Vanne SMA selon l'une quelconque des revendications précédentes, dans laquelle la vanne SMA est configurée pour fonctionner entre les températures de -40 °C et 80 °C.

5. Valve SMA selon la revendication 1, dans laquelle les motifs d'actionnement sont formés par estampage ou découpe au laser.

6. Vanne SMA selon la revendication 1, dans laquelle les motifs d'actionnement fournissent des exigences de force et de déplacement de la vanne SMA.

7. Vanne SMA selon la revendication 1, dans laquelle les motifs d'actionnement comprennent au moins deux segments électriquement isolés.

8. Vanne SMA selon la revendication 1, comprenant au moins deux segments d'actionneur SMA (60, 202), les au moins deux segments d'actionneur SMA (60, 202) permettant à l'étage (58, 204) de se déplacer le long d'au moins deux axes différents.

9. Vanne SMA selon la revendication 8, dans laquelle au moins deux des deux axes différents sont perpendiculaires l'un à l'autre.
